(19) **Europäisches Patentamt / European Patent Office / Office européen des brevets**

(11) **EP 4 449 653 B1**

(12) **EUROPEAN PATENT SPECIFICATION**

(45) Date of publication and mention
of the grant of the patent:
**15.10.2025 Bulletin 2025/42**

(21) Application number: **21840846.6**

(22) Date of filing: **17.12.2021**

(51) International Patent Classification (IPC):
*H04L 5/00* (2006.01)    *H04L 27/26* (2006.01)

(52) Cooperative Patent Classification (CPC):
**H04L 5/0048; H04L 5/0091; H04L 27/2605;
H04L 27/261; H04L 27/2646;** H04L 27/2636

(86) International application number:
**PCT/EP2021/086368**

(87) International publication number:
**WO 2023/110112 (22.06.2023 Gazette 2023/25)**

(54) **PHASE TRACKING REFERENCE SIGNAL CONFIGURATION FOR SINGLE-CARRIER WAVEFORMS**

KONFIGURATION EINES PHASENVERFOLGUNGSREFERENZSIGNALS FÜR EINZELTRÄGERWELLENFORMEN

CONFIGURATION DE SIGNAL DE RÉFÉRENCE DE SUIVI DE PHASE POUR FORMES D'ONDE À PORTEUSE UNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2024 Bulletin 2024/43**

(73) Proprietor: **Nokia Technologies Oy
02610 Espoo (FI)**

(72) Inventors:
 • **TERVO, Oskari
 90630 Oulu (FI)**
 • **TIIROLA, Esa Tapani
 90620 Oulu (FI)**

(74) Representative: **Script Intellectual Property LLP
Suite J, Anchor House
School Close
Chandlers Ford
Eastleigh, Hampshire SO53 4DY (GB)**

(56) References cited:
**WO-A1-2017/173125    WO-A1-2019/099535
US-A1- 2018 316 537**

• **XIN YU ET AL: "A Novel Waveform Scheme for THz Communications", 2021 IEEE 94TH VEHICULAR TECHNOLOGY CONFERENCE (VTC2021-FALL), IEEE, 27 September 2021 (2021-09-27), pages 1 - 6, XP034041722, DOI: 10.1109/VTC2021-FALL52928.2021.9625402**
• **LEVANEN TONI ET AL: "Mobile Communications Beyond 52.6 GHz: Waveforms, Numerology, and Phase Noise Challenge", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 28, no. 1, 2 December 2020 (2020-12-02), pages 128 - 135, XP011840096, ISSN: 1536-1284, [retrieved on 20210224], DOI: 10.1109/MWC.001.2000185**
• **MITSUBISHI ELECTRIC: "mmWave UW DFTsOFDM link level evaluation", vol. RAN WG1, no. Lisbon, Portugal; 20161010 - 20161014, 30 September 2016 (2016-09-30), XP051158863, Retrieved from the Internet <URL:http://www.3gpp.org/ftp/tsg_ran/WG1_RL1/TSGR1_86b/Docs/> [retrieved on 20160930]**

EP 4 449 653 B1

• **HASEGAWA FUMIHIRO ET AL: "3GPP standardization activities in relay based 5G high speed train scenarios for the SHF band", 2017 IEEE CONFERENCE ON STANDARDS FOR COMMUNICATIONS AND NETWORKING (CSCN), IEEE, 18 September 2017 (2017-09-18), pages 126 - 131, XP033241330, DOI: 10.1109/ CSCN.2017.8088610**

## Description

### TECHNICAL FIELD

The present disclosure relates generally to the field of wireless communications, and particularly to techniques for determining a Phase Tracking Reference Signal (PTRS) configuration in case of using single-carrier waveforms in a communication network.

### BACKGROUND

The frequencies beyond 52.6 GHz (which is part of the so-called millimeter wave (mmWave) band or sub-THz band) contain very large spectrum opportunities and will thus facilitate many high-capacity use cases, such as Integrated Access and Backhaul (IAB), Ultra-Reliable Low-Latency Communication (URLLC), massive Machine Type Communication (mMTC), and Internet-of-Things (IoT) applications. However, operation at these higher frequencies has many differences compared to lower frequencies. For example, one of the important implementation challenges at the higher frequencies is an oscillator phase noise (PN) occurring on each of receiving and transmitting sides.

In the next generation of radio access technology specified by the 3rd Generation Partnership Project (3GPP) as New Radio (NR), Reference Signals (RSs) for tracking the oscillator PN, also referred to as Phase Tracking RSs (PTRSs), have been studied for wireless communications at the frequencies beyond 52.6 GHz. More specifically, 3GPP Release 17 (Rel-17) provides support for frequencies ranging from 52.6 GHz to 71GHz by using single-carrier Cyclic Prefix (CP) - Discrete Fourier Transform (DFT) spread Orthogonal Frequency Division Multiplexing (CP-DFT-s-OFDM) in an uplink. Single-carrier waveforms are promising since they are very robust to the PN, employing low-complexity time-domain PN compensation. In 3GPP Rel-19 and beyond, going to even higher frequencies above 71 GHz may be under discussion. Thus, the PN and the PTRS design will be one of the key topics in the nearest future due to the significantly increased PN problem at the higher frequencies.

Another important design aspect to consider at the frequencies above 71 GHz is a waveform. Already in 3GPP Rel-18 discussions, it has been proposed to consider new single-carrier waveforms when going above 71 GHz. Especially interesting candidates are single-carrier waveforms without a CP, such as Known Tail (KT)-DFT-s-OFDM (KT-DFT-s-OFDM) (also known as Unique Word (UW) DFT-s-OFDM), in which the CP of DFT-s-OFDM is replaced with some head and/or tail sequences of modulation symbols in the beginning and end of each single-carrier waveform symbol. Such head and/or tail sequence is inserted prior to a DFT block in a transmitter. Another waveform candidate may be, e.g., obtained by means of Single Carrier Frequency Domain Equalization (SC-FDE), which is employed, e.g., in IEEE 802.11ad standard. SC-FDE does not employ DFT or IFFT operations in the transmitter, but uses a fixed sequence in the beginning of each single carrier block of symbols.

WO2019/099535 A1 discloses a method for ensuring a number of Phase Tracking Reference Signal(s) (PT-RSs) are the same for multiple slots as known in the art. A wireless transmit/receive unit (WTRU) may receive control information including a number of scheduled resource blocks (RBs) then determine a PT-RS density based on the number of scheduled RBs. The WTRU may determine a RB offset value for the WTRU based on a WTRU-ID modulo the maximum RB offset value, where the maximum value for the RB offset value may be based on at least one of the number of the scheduled RBs and the PT-RS density. The WTRU may then transmit or receive a signal with PT-RS based on the RB offset value.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that enables efficient PTRS configuration for single-carrier waveforms in a communication network.

The objective above is achieved by the features of the independent claims in the appended claims. Further embodiments and examples are apparent from the dependent claims, the detailed description and the accompanying drawings.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:

FIG. 1 schematically shows a symbol structure that is provided by using Discrete Fourier Transform (DFT) spread Orthogonal Frequency Division Multiplexing (DFT-s-OFDM);

FIG. 2 schematically shows a symbol structure that is provided by using Known Tail (KT) DFT-s-OFDM (KT-DFT-s-OFDM);

FIG. 3 shows a block diagram of a UE in accordance with one example embodiment;

FIG. 4 shows a flowchart of a method for operating the UE shown in FIG. 3 in accordance with one example embodiment;

FIG. 5 shows a block diagram of a network node in accordance with one example embodiment;

FIG. 6 shows a flowchart of a method for operating the network node shown in FIG. 5 in accordance with one example embodiment;

FIGs. 7A and 7B show different patterns of Phase Tracking Reference Signal (PTRS) mapping in case of using different lengths of head and tail sequences of modulation symbols; and

FIGs. 8A-8G show the comparative performance results of the legacy DFT-s-OFDM method and the method shown in FIG. 4 at carrier frequency 140 GHz, using 64 Quadrature Amplitude Modulation (QAM), subcarrier spacings 1920 kHz and 960 kHz, and different KT lengths (8, 16, 32, 64, and 128 symbols).

## DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatuses and methods disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

According to the example embodiments disclosed herein, a User Equipment (UE) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a desktop computer, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial IoT (IIoT) device, a machine-type communication (MTC) device, a group of Massive IoT (MIoT) or Massive MTC (mMTC) devices/sensors, or any other suitable mobile device configured to support wireless communications. In some embodiments, the UE may refer to at least two collocated and inter-connected UEs thus defined.

As used in the example embodiments disclosed herein, a network node may refer to a fixed point of communication for a UE in a particular communication network. More specifically, the network node is used to connect the UE to a Data Network (DN) through a Core Network (CN) and may be referred to as a base transceiver station (BTS) in terms of the 2G communication technology, a NodeB in terms of the 3G communication technology, an evolved NodeB (eNodeB) in terms of the 4G communication technology, and a gNB in terms of the 5G communication technology (also referred to as New Radio (NR)). The network node may serve different cells, such as a macrocell, a microcell, a picocell, a femtocell, and/or other types of cells. The macrocell may cover a relatively large geographic area (for example, at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (for example, a home). Correspondingly, the network node serving the macrocell may be referred to as a macro node, the network node serving the microcell may be referred to as a micro node, and so on.

In some example embodiments, the UE and the network node may be applicable in different Integrated Access and Backhaul (IAB) scenarios which may be quite important for the sub-THz band. In these example embodiments, the UE functionalities (i.e., backhaul link operation) may be implemented by a Mobile Termination (MT) part of an IAB node, while the network node (e.g., gNB) functionalities (i.e., access link operation) may be implemented by a Distributed Unit (DU) part of the IAB node.

According to the example embodiments disclosed herein, a communication network, in which the UE and the network node may communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

As used in the example embodiments disclosed herein, a Phase Tracking Reference Signal (PTRS) may refer to a reference signal that enables detection and compensation of an oscillator phase noise (PN). The PN usually increases as a function of an oscillator carrier frequency. Therefore, the PTRS may be advantageously utilized at high carrier frequencies, such as those from the mmWave and sub-THz bands, to mitigate the PN. The PTRS may be UE-specific and confined in one or more allocated resource elements or Physical Resource Blocks (PRBs).

It should be also noted that wireless communications between the network node and the UE may be performed by using different types of the OFDM scheme, such as Cyclic Prefix (CP) OFDM, Single Carrier Frequency Division Multiplexing (SC-FDM), Discrete Fourier Transform spread OFDM (DFT-s-OFDM), and Multi-Carrier Code Division Multiplexing (MC-CDM), etc.

3GPP Technical Specification (TS) 38.211 (see Table 6.4.1.2.2.2-1) defines PTRS configurations for the DFT-s-OFDM in an uplink such that PTRSs are inserted in a time domain before DFT (pre-DFT) and there are five different configurations from which the PTRS configuration is chosen according to a scheduled bandwidth (BW) (see Table 6.2.3.2-1 in 3GPP TS 38.214). In this case, the PTRS configuration is generally defined by the following two configuration parameters:

- a sample density of PTRS for the DFT-s-OFDM, pre-DFT, indicating a set of thresholds (number of PRBs) $T=\{N_{PRBn}, n = 0,1,2,3,4\}$, which indicates the dependency between the presence of the PTRS and the scheduled BW and values of $N_{group}^{PTRS}$ (a number of PTRS groups) and $N_{samp}^{group}$ (a number of samples or, in other words, PTRS symbols per PTRS group) the UE should use depending on the scheduled BW; and

- a time density (OFDM symbol level) of the PTRS for the DFT-s-OFDM (if this parameter is absent, the UE may apply value d1, as follows from clause 6.1 of 3GPP TS 38.214).

The PTRS symbols inserted in the time domain as in 5G NR DFT-s-OFDM, enables relatively simple time-domain PN compensation on the receiver side.

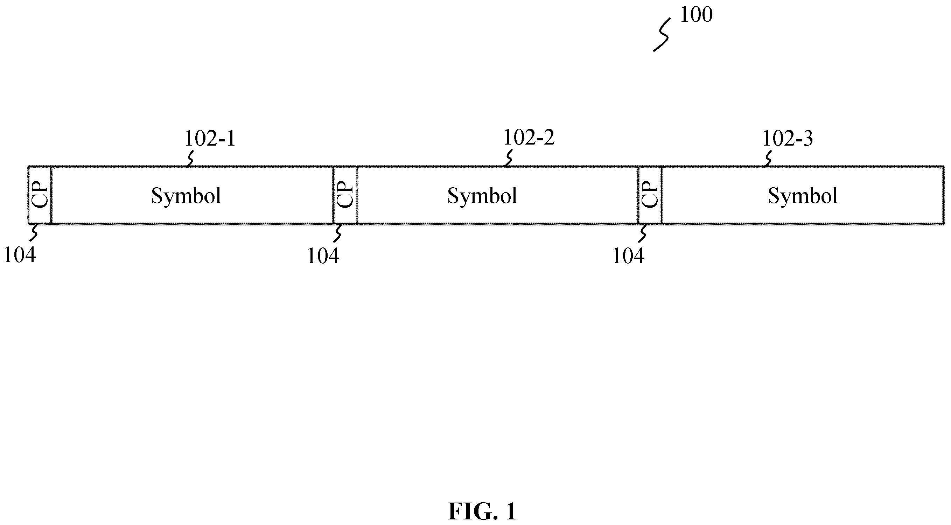

FIG. 1 schematically shows a symbol structure 100 that is provided by using the DFT-s-OFDM. As shown in FIG. 1, the symbol structure 100 comprises three OFDM symbols 102-1, 102-2, 102-3 which are separated by a cyclic prefix (CP) 104. In the DFT-s-OFDM, the CP 104 is used to facilitate inter-symbol-interference-free reception in a frequency selective channel by using a frequency domain equalizer. 5G NR specification supports either normal CP, or extended CP. Each of the OFDM symbols 102-1, 102-2, 102-3 is extended by the CP 104 (after Inverse Fast Fourier Transform (IFFT)). Given the symbol structure 100 and the above-mentioned description of the standardized PTRS configuration, PTRS mapping may be performed within each of the OFDM symbols 102-1, 102-2, 102-3 such that the PTRS mapping starts from the beginning (i.e., a head end) of each OFDM symbol, and the length of the PTRS mapping is equal to the length of the OFDM symbol itself.

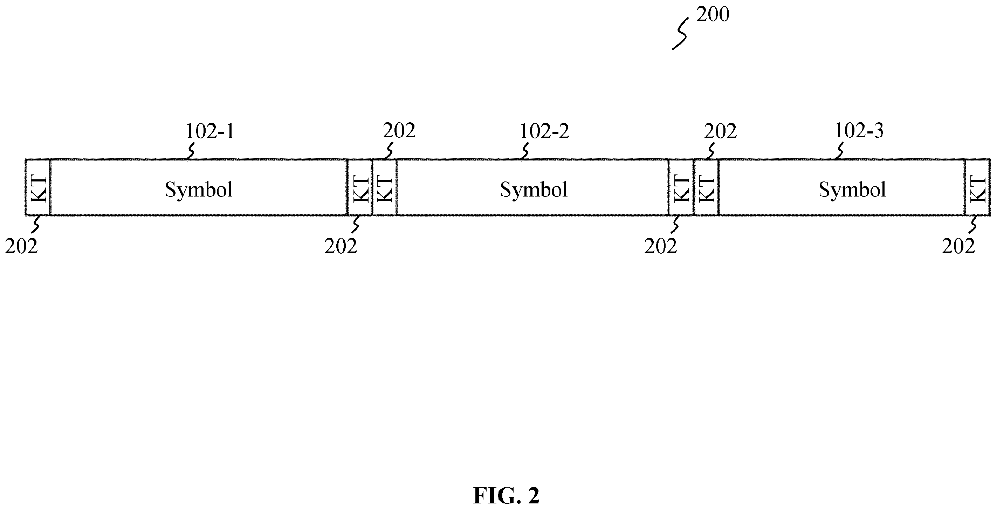

FIG. 2 schematically shows a symbol structure 200 that is provided by using Known Tail (KT) DFT-s-OFDM (KT-DFT-s-OFDM). The KT-DFT-s-OFDM is also referred to as Unique Word (UW-DFT-s-OFDM). It should be noted that the KT-DFT-s-OFDM may provide one of the most promising waveform candidates for the frequencies beyond 71 GHz. The KT-DFT-s-OFDM is quite similar to the DFT-s-OFDM defined for the uplink and also supported by the uplink in 5G NR.

However, the main difference is that the DFT-s-OFDM uses the CP 104, while in the KT-DFT-s-OFDM, the CP 104 is replaced by an in-symbol known sequence 202 of modulation symbols (also referred to as the KT sequence) having a configurable sequence length. The KT sequence 202 is appended to head end and tail end of each of the OFDM symbols 102-1, 102-2, 102-3 prior to the DFT operation on the transmitter side. The lengths of the head and tail sequences of modulation symbols may be different or the same, typically such that the length of the head sequence of modulation symbols is bigger than the length of the tail sequence of modulation symbols. In addition, there is no extra guard interval between the OFDM symbols 102-1, 102-2, 102-3. All of this provides many benefits, such as:

- the flexibly configurable sequence length provides optimized spectrum efficiency depending on particular applications, without affecting a slot structure as in CP-DFT-s-OFDM or other CP-based waveforms;

- the PAPR is reduced, thereby increasing a transmit power;

- the PAPR may be further reduced using spectrum shaping techniques, such as Frequency-Domain Spectral Shaping (FDSS) or FDSS with spectrum extension;

- 15-symbol slots may be used, compared to conventional 14-symbol slots (applied with a normal CP length); and

- the KT sequence 202 may be used, e.g., for channel estimation and PN estimation, providing improved operational performance.

The PTRS mapping described above for the symbol structure 100 may not be optimized for the symbol structure 200 because of the presence of the KT sequence 202 in the beginning and end of each of the OFDM symbols 102-1, 102-2, 102-3. In particular, the head and/or tail sequence of modulation symbols may be used for PN compensation in many cases. For this reason, PN compensation capability and optimum PTRS allocation may also depend on the sequence length of the KT sequence 202.

As noted earlier, the PN is pronounced more significantly at higher frequencies, and the current PTRS configurations are designed mostly for OFDM and DFT-s-OFDM waveforms. As for the KT-DFT-s-OFDM, it has not yet been standardized anyhow, and there are still open questions concerning its efficient application, especially at the frequencies corresponding to the mmWave and sub-THz bands.

The example embodiments disclosed herein provide a technical solution that allows mitigating or even eliminating the above-sounded drawbacks peculiar to the prior art. In particular, the technical solution disclosed herein relates to a PTRS configuration for single-carrier waveforms (e.g., KT-DFT-s-OFDM or SC-FDE waveforms, or any variant of those) used in a communication network. For this purpose, a configurable-length sequence of modulation symbols is added in the beginning and end of each single-carrier waveform symbol. One or more sequences of modulation symbols are reported to a UE from a network node. The PTRS configuration is defined at the UE based on the sequence length(s) and indicative of how PTRS mapping is to be performed within each single-carrier waveform symbol. The UE may then perform communications with the network node (i.e., data reception and/or transmission) based on the PTRS configuration. With such PTRS configuration, it is possible to efficiently perform PN detection and compensation. Moreover, the configurable sequence length may provide optimized spectrum efficiency.

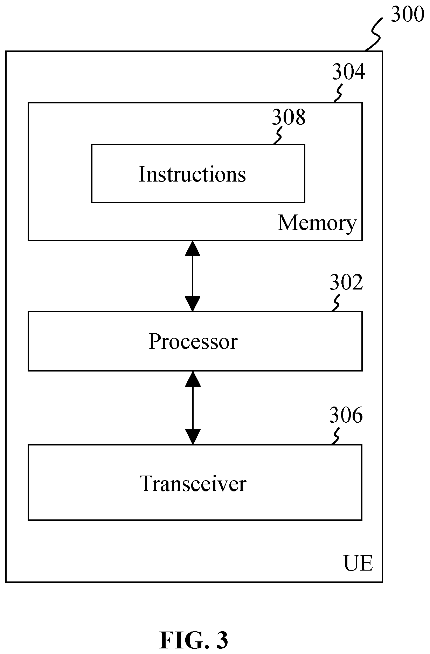

FIG. 3 shows a block diagram of a UE 300 in accordance with one example embodiment. The UE 300 is intended to communicate with one or more network nodes in any of the above-described wireless communication networks. As shown in FIG. 3, the UE 300 comprises a processor 302, a memory 304, and a transceiver 306. The memory 304 stores processor-executable instructions 308 which, when executed by the processor 302, cause the processor 302 to perform the aspects of the present disclosure, as will be described below in more detail. It should be noted that the number, arrangement, and interconnection of the constructive elements constituting the UE 300, which are shown in FIG. 3, are not intended to be any limitation of the present disclosure, but merely used to provide a general idea of how the constructive elements may be implemented within the UE 300. For example, the processor 302 may be replaced with several processors, as well as the memory 304 may be replaced with several removable and/or fixed storage devices, depending on particular applications. Furthermore, in some embodiments, the transceiver 306 may be implemented as two individual devices, with one for a receiving operation and another for a transmitting operation. Irrespective of its implementation, the transceiver 306 is intended to be capable of performing different operations required to perform the data reception and transmission, such, for example, as signal modulation/demodulation, encoding/decoding, etc. In other embodiments, the transceiver 306 may be part of the processor 302 itself.

The processor 302 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 302 may be implemented as any combination of one or more of the aforesaid. As an example, the processor 102 may be a combination of two or more microprocessors.

The memory 304 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 308 stored in the memory 304 may be configured as a computer-executable program code which causes the processor 302 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 304) on the fly.

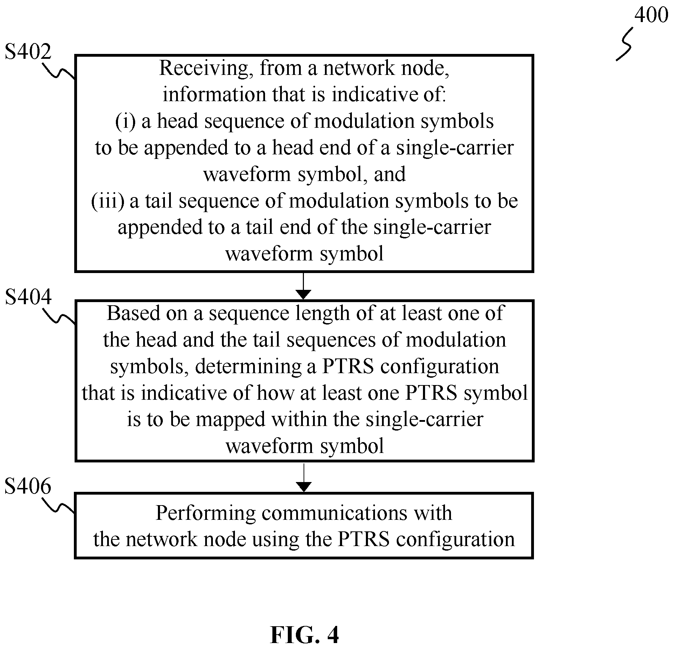

FIG. 4 shows a flowchart of a method 400 for operating the UE 300 in accordance with one example embodiment. Although the method 400 is described below with reference to one single-carrier waveform symbol, those skilled in the art would appreciate that the method 400 may be also applied to a set of single-carrier waveform symbols (in this case, the method 400 may be performed for each of the set of single-carrier waveform symbols in parallel or in sequence).

The method 400 starts with a step S402, in which the processor 302 receives (e.g., via the transceiver 306), from a network node, information that is indicative of: (i) a head sequence of modulation symbols to be appended to a head end of a single-carrier waveform symbol, and (ii) a tail sequence of modulation symbols to be appended to a tail end of the single-carrier symbol. The single-carrier waveform symbol comprises a set of indexed resource elements, and the head end of the single-carrier waveform symbol may refer to a first-indexed resource element, while the tail end of the single-carrier waveform symbol may refer to a last-indexed resource element. In this sense, the head sequence of modulation symbols may refer to a sequence of modulation symbols appended to the first-indexed resource element of the single-carrier waveform symbol (i.e., in the beginning of the single-carrier waveform symbol), while the tail sequence of modulation symbols may refer to a sequence of modulation symbols appended to the last-indexed resource element of the single-carrier waveform symbol (i.e., in the end of the single-carrier waveform symbol). Each of the head sequence of modulation symbols and the tail sequence of modulation symbols has a sequence length expressed as a number of modulation symbols in the sequence or a number of resource elements occupied by the sequence. The head sequence of modulation symbols and/or the tail sequence of modulation symbols may have a configurable sequence length. The single-carrier waveform symbol may comprise at least one KT-DFT-s-OFDM symbol, but the present disclosure is not limited to this type of the single-carrier waveform symbol and any other single-carrier waveform symbols (e.g., SC-FDE symbols) using one or more known sequences of modulation symbols (e.g., complex sequences, such as Zadoff-Chu sequences, or pi/2-BPSK sequences, or any other low-PAPR sequences) may be used depending on particular applications. Moreover, the head and tail sequences of modulation symbols may be of the same or different type, and/or may have the same or different sequence length.

Then, the method 400 proceeds to a step S404, in which the processor 302 uses the sequence length of at least one of the head sequence of modulation symbols and the tail sequence of modulation symbols to determine a PTRS configuration. The PTRS configuration is indicative of how one or more PTRS symbols are to be mapped within the single-carrier waveform symbol.

According to the invention, the PTRS configuration indicates a mapping start point of the at least one PTRS symbol within the single-carrier waveform symbol; and may further indicate a mapping length of the at least one PTRS symbol within the single-carrier waveform symbol. The mapping start point refers to a resource element (or index) of a single-carrier waveform symbol, from which the mapping of the PTRS configuration is calculated. In other words, the mapping start point implies a distance from the head end of the single-carrier waveform symbol to a first PTRS symbol of the PTRS configuration within the single-carrier waveform symbol, with all (if available) subsequent PTRS symbols being mapped after the first PTRS symbol within the single-carrier waveform symbol. The mapping length refers to a distance at which each of the at least one PTRS symbols is mapped within the single-carrier waveform symbol. It should be noted that, in case of multiple PTRS symbols, they may be mapped either immediately one after another or with a certain inter-PTRS symbol gap within the mapping length. Furthermore, the multiple PTRS symbols may be also divided into PTRS groups which, in turn, may be mapped with a certain inter-group gap within the mapping length. The mapping length is calculated from the mapping start point and may be equal to a part of the single-carrier waveform symbol, which is occupied by the PTRS symbol(s), or to the whole length of the single-carrier waveform symbol (i.e., the PTRS symbols are distributed along the length of the single-carrier waveform symbol).

The processor 302 may determine the mapping start point of the PTRS symbol(s) based on the sequence length of the head sequence of modulation symbols and determine the mapping length of the PTRS symbol(s) based on the sequence length of the tail sequence of modulation symbols. Alternatively, the processor 302 may determine the mapping start point of the PTRS symbol(s) based on the sequence length of the tail sequence of modulation symbols and determine the mapping length of the PTRS symbol(s) based on the sequence length of the head sequence of modulation symbols. Furthermore, the processor 302 may use different rules or criteria when determining the mapping start point and the mapping length. For example, such rules or criteria may look as follows: the bigger the sequence length of the head sequence of modulation symbols, the farther the mapping start point of the PTRS symbol(s) is relative to the head end of the single-carrier waveform symbol; and/or the bigger the sequence length of the tail sequence of modulation symbols, the shorter the mapping length of the PTRS symbol(s) within the single-carrier waveform symbol.

In other example embodiments, in addition to the mapping start point and the mapping length, the PTRS configuration may further indicate: a number of PTRS groups into which the PTRS symbol(s) is(are) to be divided within the single-carrier waveform symbol; and a number of PTRS symbols in each of the PTRS groups. PTRS symbols are arranged consecutive in time in each of the PTRS groups. Again, the processor 302 may determine the number of the PTRS groups according to different rules or criteria. For example, the processor 302 may use the following rule or criterion: the bigger the sequence length of at least one of the head sequence of modulation symbols and the tail sequence of the modulation symbols, the smaller the number of the PTRS groups into which the PTRS symbol(s) is(are) to be divided within the single-carrier waveform symbol. Other possible rules or criteria may look as follows: the bigger the sequence length of the head sequence of modulation symbols, the farther a first PTRS group of the PTRS groups is relative to the head end of the single-carrier waveform symbol; and/or the bigger the sequence length of the tail sequence of modulation symbols, the farther a last PTRS group of the PTRS groups is relative to the tail end of the single-carrier waveform symbol.

Turning back to FIG. 4, after the step S404 is finished, the method 400 goes on to a step S406, in which the processor 302 performs communications (e.g., via the transceiver 306) with the network node using the PTRS configuration. Such communications may imply data reception and/or transmission over a communication channel established between the UE 300 and the network node. Such a communication channel may comprise an uplink channel (e.g., the Physical Uplink Shared Channel (PUSCH)), a downlink channel (e.g., the Physical Downlink Shared Channel (PDSCH)), or their combination.

In one example embodiment, the processor 302 may define the PTRS configuration in the step 404 of the method 400 based on the sequence length(s) in combination with at least one of the following: a number of PRBs dedicated to the communication channel; a MCS used by the UE 300 (e.g., MCS type) for the communications with the network node; a symbol length used in the communication channel (this parameter may be used in case of pure single-carrier waveforms, e.g., SC-FDE waveforms, when there are no subcarriers but the PN rather depends on the symbol length); and a subcarrier spacing applied for the communication channel.

It should be noted that the PTRS configuration may be defined differently for different use scenarios. In general, the PTRS configuration has the following impact to receiver performance:

-    the more PTRSs, the better detection performance;

-    the more PTRSs, the higher overhead in the communication network (which leads to a reduced amount of PRBs for data).

Therefore, the optimum amount of PTRSs may vary according to the oscillator implementation (at both the UE 300 and the network node), as well as the MCS or subcarrier spacing involved.

In one example embodiment, the memory 304 may further comprise a PTRS database that comprises a plurality of database entries. Each of the plurality of database entries may indicate: (i) a PTRS configuration, and (ii) at least one of a head sequence of modulation symbols and a tail sequence of modulation symbols by which the PTRS configuration is determined. In this example embodiment, the processor 302 may determine the PTRS configuration by selecting, from the PTRS database, the PTRS configuration corresponding to the information received in the step S302. In other words, the processor 302 may check which of the PTRS configurations indicated in the PTRS database corresponds to the head and tail sequences of modulation symbols indicated in the received information and select such a PTRS configuration for further communications with the network node. The PTRS database may be structured in a tabular form, with each row corresponding to a certain PTRS configuration and each column corresponding to certain head and/or tail sequence of modulation symbols required for obtaining the PTRS configuration. Alternatively, the PTRS database may be configured as a set of tables, with each table being associated with a certain PTRS configuration and certain head and/or tail sequence of modulation symbols required for obtaining the PTRS configuration. The processor 302 may be configured to query and maintain the PTRS database by using any suitable programming language, for example, Structured Query Language (SQL).

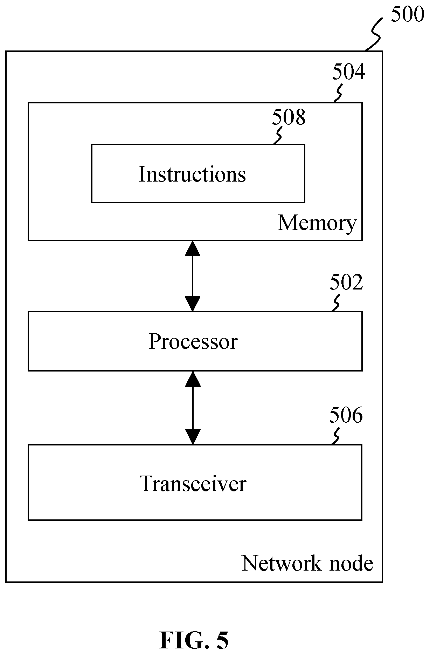

FIG. 5 shows a block diagram of a network node 500 in accordance with one example embodiment. The network node 500 is intended to communicate with the UE 300 in any of the above-described communication networks. As shown in FIG. 5, the network node 500 comprises a processor 502, a memory 504, and a transceiver 506. The memory 504 stores processor-executable instructions 508 which, when executed by the processor 502, cause the processor 502 to implement the aspects of the present disclosure, as will be described below in more detail. It should be again noted that the number, arrangement, and interconnection of the constructive elements constituting the network node 500, which are shown in FIG. 5, are not intended to be any limitation of the present disclosure, but merely used to provide a general idea of how the constructive elements may be implemented within the network node 500. In general, the processor 502, the memory 504, the transceiver 506, and the processor-executable instructions 508 may be implemented in the same or similar manner as the processor 302, the memory 304, the transceiver 306, and the processor-executable instructions 308, respectively.

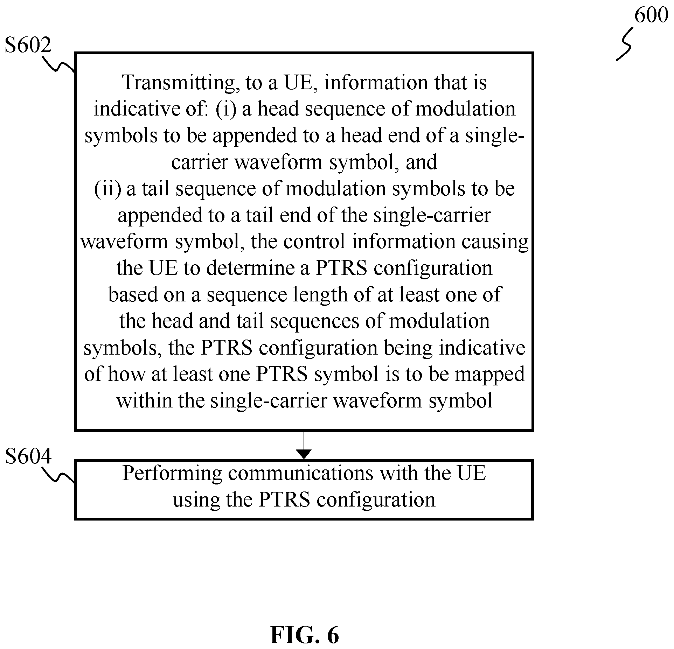

FIG. 6 shows a flowchart of a method 600 for operating the network node 500 in accordance with one example embodiment. The method 600 starts with a step S602, in which the processor 502 transmits (e.g., via the transceiver 506) the above-mentioned information to the UE 300 (i.e., the processor 302). The memory 504 may comprise a PTRS database similar to that stored in the memory 304 of the UE 300, and the processor 502 may obtain such information by using the PTRS database (e.g., the processor 502 may indicate which of the head and tail sequences of modulation symbols to use, the sequence length(s), etc.). The method 600 further proceeds to a step S604, in which the processor 502 performs communications (e.g., over the above-mentioned communication channel) with the UE 300 by using the PTRS configuration corresponding to the transmitted information. As noted above, the PTRS configuration is defined based on the sequence length of at least one of the head sequence of modulation symbols and the tail sequence of modulation symbols. Optionally, information about any of the number of PRBs, the MCS used by the UE 300, the symbol length, and the subcarrier spacing may be also involved to determine the PTRS configuration.

Let us now consider some non-restrictive examples of how to determine the PTRS configuration based on the sequence lengths of the head and tail sequences of modulation symbols each represented by a KT sequence. In these examples, it is assumed that the PTRS mapping is performed within each KT-DFT-s-OFDM symbol and depends on the KT length (the sequence lengths of the KT sequences in the beginning and end of the KT-DFT-s-OFDM symbol are set to be equal for simplicity). It is also assumed that the PTRS symbols are divided into PTRS groups of equal size. The longer the KT length, the higher is the distance between the KT and its closest PTRS group. The mapping start point (or index within each KT-DFT-s-OFDM symbol) and the mapping length will depend on the KT length.

Table 1 below shows the values of the mapping start index and the mapping length depending on different KT lengths (8, 16, and 32 symbols). For simplicity, each example tables given herein assume that the head and tail sequences of modulation symbols have equal lengths. In Table 1, X is the scaling factor (which may be, e.g., 2 by default), and M_sc is the number of allocated subcarriers (e.g., 12*number of PRBs). If the head and tail KT lengths are different, the mapping start index may depend on the KT sequence in the beginning of the KT-DFT-s-OFDM symbol, while the mapping length may depend on the KT sequence in the end of the KT-DFT-s-OFDM symbol.

Table 1: Dependence of PTRS mapping on KT length.

| KT length | start index M_s | Mapping length |
|-----------|-----------------|----------------|
| 8 | 8*X | M_sc - 8*2*X |
| 16 | 16*X | M_sc - 16*2*X |
| 32 | 32*X | M_sc - 32*2*X |

If the number of the PTRS groups $N_{group}^{PTRS}$ and/or the number of PTRSs $N_{samp}^{group}$ in each PTRS group also depend on the KT length, for example, one of the following statements may hold:

- the larger the KT length, the smaller $N_{group}^{PTRS}$ ;

- the larger the KT length, the smaller $N_{samp}^{group}$ .

Table 2 below shows how $N_{group}^{PTRS}$ and $N_{samp}^{group}$ may depend on the KT length.

Table 2: Dependence of the number of PTRS groups and the number of PTRSs in each PTRS group on KT length.

| KT length | $N_{group}^{PTRS}$ | $N_{samp}^{group}$ |
|-----------|--------------------|--------------------|
| <16 | 8 | 4 |

(continued)

| KT length | $N_{group}^{PTRS}$ | $N_{samp}^{group}$ |
|-----------|--------------------|--------------------|
| 16...64 | 6 | 4 |
| >64 | 4 | 2 |

Tables 3-1 and 3-2 below show how $N_{group}^{PTRS}$ and $N_{samp}^{group}$ may depend on the KT length and different numbers of allocated PRBs.

Table 3-1: Dependence of the number of PTRS groups and the number of PTRSs in each PTRS group on KT length in case of PRBs < 10.

| # of PRBs < 10 | | |
|----------------|--------------------|--------------------|
| KT length | $N_{group}^{PTRS}$ | $N_{samp}^{group}$ |
| <16 | 6 | 2 |
| 16...64 | 4 | 2 |
| >64 | 2 | 2 |

Table 3-2: Dependence of the number of PTRS groups and the number of PTRSs in each PTRS group on KT length in case of PRBs ≥ 10.

| # of PRBs ≥10 | | |
|---------------|--------------------|--------------------|
| KT length | $N_{group}^{PTRS}$ | $N_{samp}^{group}$ |
| <16 | 8 | 4 |
| 16...64 | 6 | 4 |
| >64 | 4 | 2 |

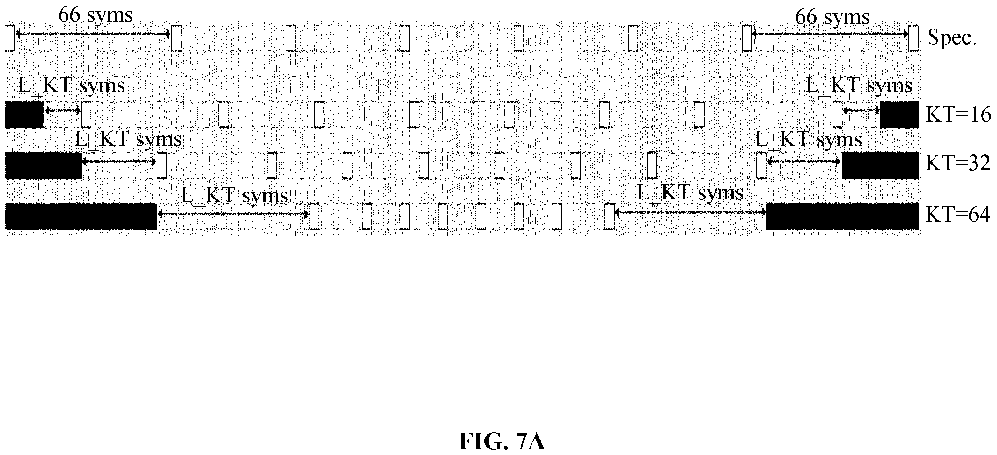

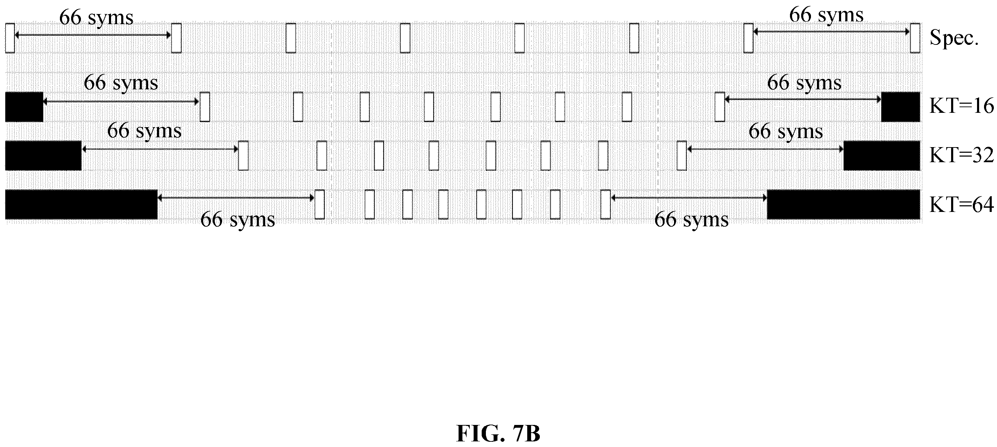

FIGs. 7A and 7B show different patterns of the PTRS mapping in case of using different lengths of the head and tail sequences of modulation symbols. At the same time, it is assumed that, in each case, the lengths of the head and tail sequences of modulation symbols are equal for simplicity. More specifically, the first (upper) pattern denoted by "Spec." refers to the standard PTRS mapping within a DFT-s-OFDM symbol, while the patterns denoted by "KT=16", "KT=32" and "KT=64" refer to the PTRS mapping within KT-DFT-s-OFDM symbols with different KT lengths (16, 32, and 64 modulation symbols). In these patterns, $N_{samp}^{group} = 4$, and $N_{group}^{PT-RS} = 8$. Black coloured boxes denote the KT symbols, and white coloured boxes denote the PTRS groups. In the patterns "KT=16", "KT=32" and "KT=64", the mapping start index is set as L_KT*2 and the mapping length is set as M_sc-L_KT*4 (where L_KT is the number of modulation symbols occupied by the KT sequence). Unlike FIG. 7A, the distance between the KT sequence and the closest PTRS group is kept constant (i.e., 66 modulation symbols) in FIG. 7B.

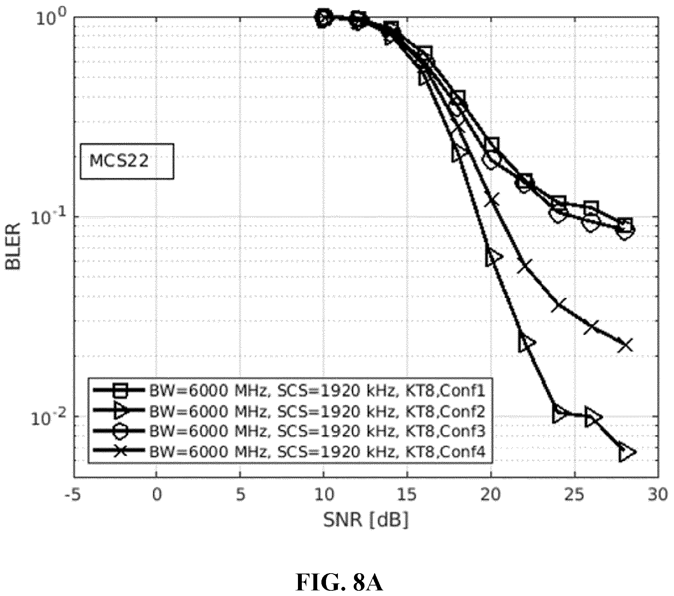

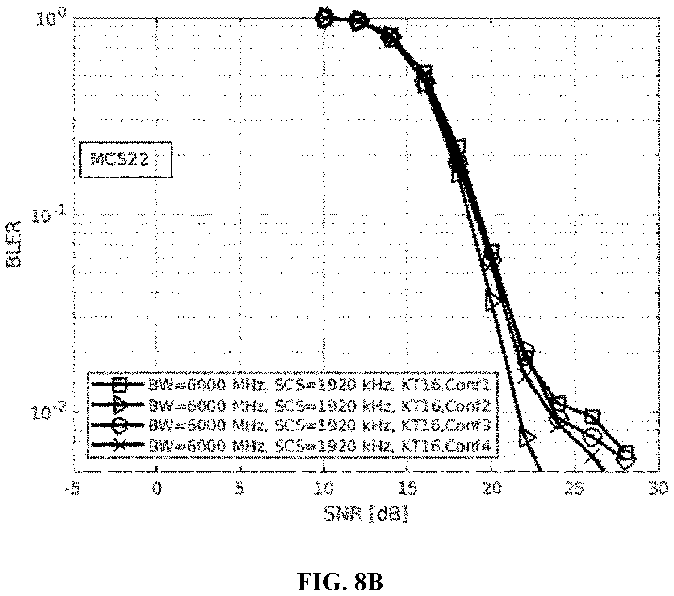

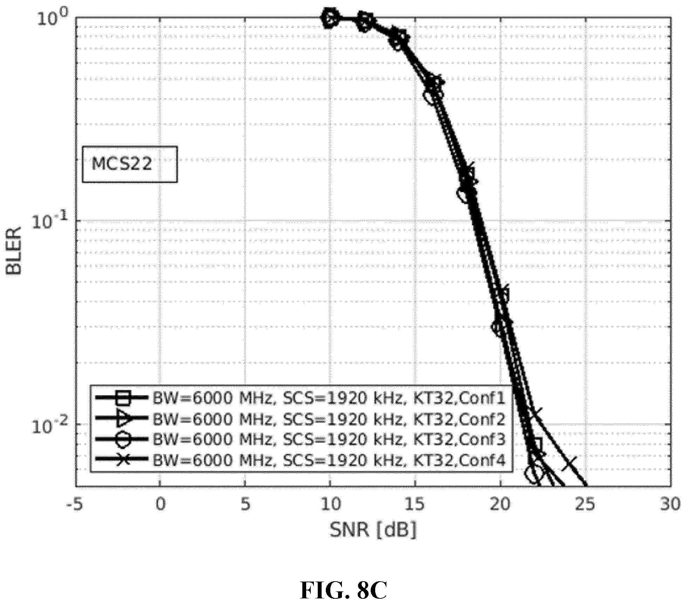

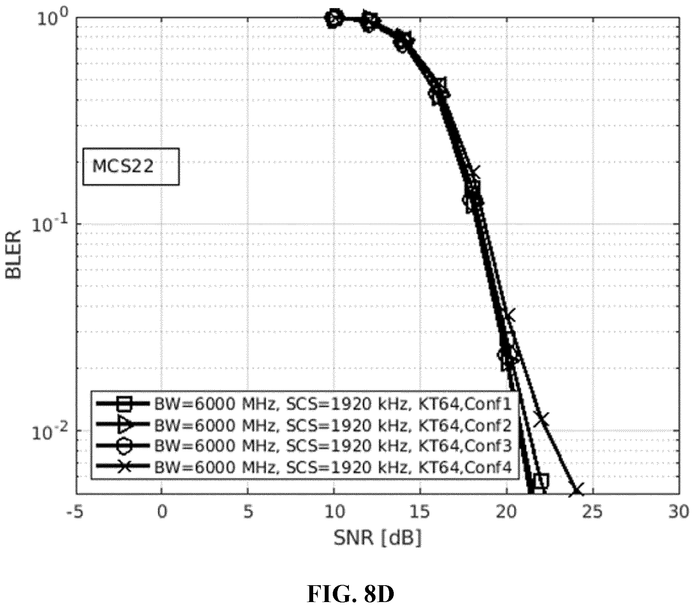

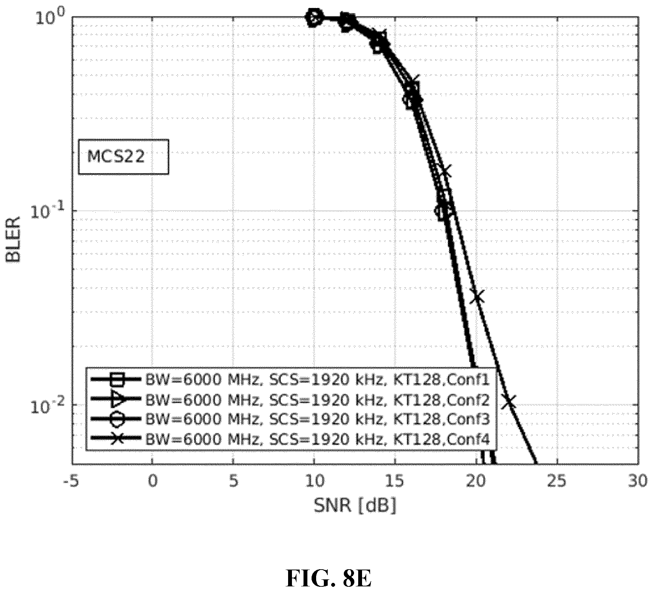

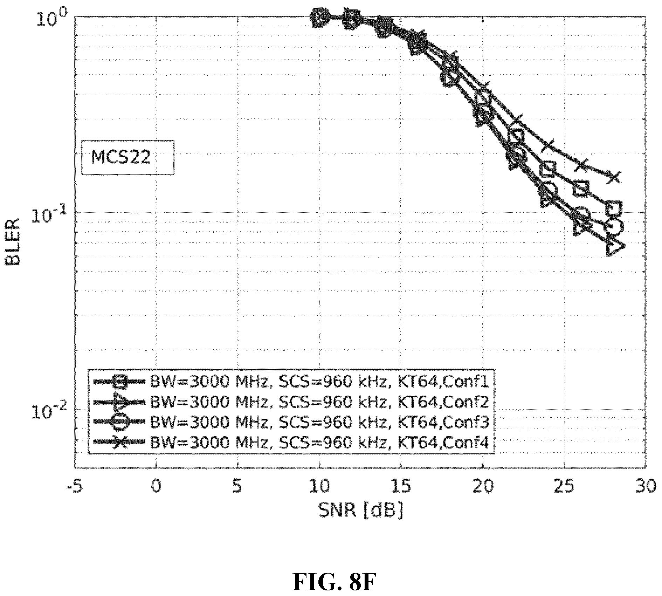

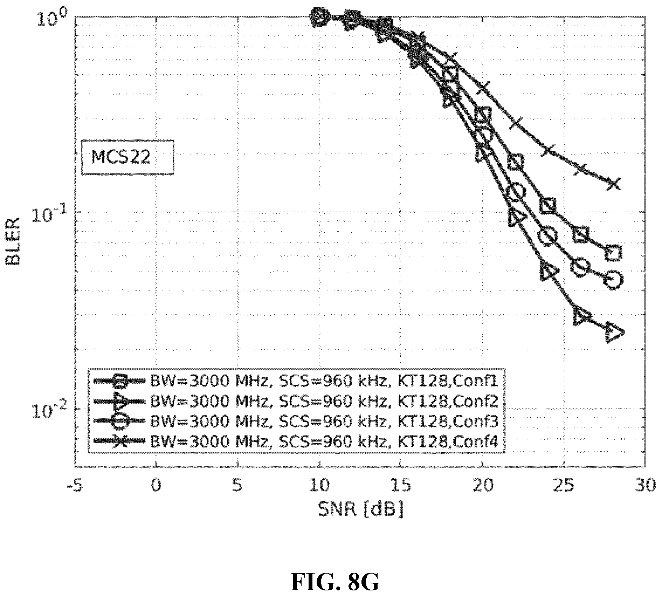

FIGs. 8A-8G show the comparative performance results of the legacy DFT-s-OFDM method and the method 400 at carrier frequency 140 GHz, using 64 Quadrature Amplitude Modulation (QAM), subcarrier spacings 1920 kHz and 960 kHz, and different KT lengths (8, 16, 32, 64, and 128 symbols). In FIGs. 8A-8G, "MCS22" denotes a certain MCS selected from Table 5.1.3.1-1 ("MCS index table 1 for PDSCH") in 3GPP TS38.214 (in particular, "MCS22" here means taking MCS index 22, i.e., it corresponds to 64QAM (modulation order 6) and a specific code rate).

As follows from FIG. 8A-8G, the comparative performance results are represented by the dependences of a Block Error Rate (BLER) on a Signal-to-Noise Ratio (SNR). The legends in FIGs. 8A-8G denote the following:

- Conf1: the legacy DFT-s-OFDM method, in which the PTRS mapping is for the whole symbol and the mapping start index = 0;

- Conf2: one possible embodiment of the method 400, where the mapping start index and the mapping length are set as L_KT*2 and M_sc-L_KT*4, respectively;

- Conf3: one other possible embodiment of the method 400, in which the mapping start index is at a fixed offset from the KT sequence, thereby leading to the fact that the distance between the KT sequence and the closest PTRS group is fixed independent of the KT length (as in FIG. 7B);

- Conf4: one other possible embodiment of the method 400, in which the mapping starts right after the head KT sequence and ends right before the tail KT sequence, i.e., the mapping start index = L_KT and the mapping length = M_sc-L_KT*2.

One can observe that under each of the above experimental conditions, the configuration Conf2 gives the best performance, and considerable gains (e.g., when compared to the legacy Conf1) especially for smaller KT lengths. This clearly verifies the advantages of the method 400.

It should be noted that each step or operation of the methods 400 and 600, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processor 302 or 502, respectively. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims.

## Claims

1. A User Equipment, UE 300, operable in a communication network, comprising:

    at least one processor (302); and
    at least one memory (304) comprising a computer program code;
    wherein the at least one memory and the computer program code are configured to, with the at least one processor, cause the UE to:

        receive, from a network node, information that is indicative of: (i) a head sequence of modulation symbols to be appended to a head end of a single-carrier waveform symbol, and (ii) a tail sequence of modulation symbols to be appended to a tail end of the single-carrier waveform symbol (S402);
        based on a sequence length of at least one of the head sequence of modulation symbols and the tail sequence of modulation symbols, determine a Phase Tracking Reference Signal, PTRS, configuration that is indicative of how at least one PTRS symbol is to be mapped within the single-carrier waveform symbol (S404); and
        perform communications with the network node using the PTRS configuration (S406),
        wherein the PTRS configuration is indicative of a mapping start point of the at least one PTRS symbol within the single-carrier waveform symbol,
        wherein the mapping start point implies a distance from the head end of the single-carrier waveform symbol to a first PTRS symbol of the at least one PTRS symbol within the single-carrier waveform symbol,
        wherein the single-carrier waveform symbol comprises at least one of a known Tail Discrete Fourier Transform spread Orthogonal Frequency Division Multiplexing, KT-DFT-s-OFDM, symbol or a unique word Discrete Fourier Transform spread Orthogonal Frequency Division Multiplexing, UW-DFT-s-sOFDM, symbol.

**2.** The UE of claim 1, wherein the PTRS configuration is indicative of:
a mapping length of the at least one PTRS symbol within the single-carrier waveform symbol, the mapping length being calculated from the mapping start point.

**3.** The UE of claim 2, wherein the at least one memory and the computer program code are configured to, with the at least one processor, cause the UE to:

determine the mapping start point of the at least one PTRS symbol based on the sequence length of the head sequence of modulation symbols and determine the mapping length of the at least one PTRS symbol based on the sequence length of the tail sequence of modulation symbols; or
determine the mapping start point of the at least one PTRS symbol based on the sequence length of the tail sequence of modulation symbols and determine the mapping length of the at least one PTRS symbol based on the sequence length of the head sequence of modulation symbols.

**4.** The UE of claim 3, wherein the at least one memory and the computer program code are configured to, with the at least one processor, cause the UE to determine the mapping start point and the mapping length according to at least one of the following criteria:

the bigger the sequence length of the head sequence of modulation symbols, the farther the mapping start point of the at least one PTRS symbol is relative to the head end of each of the single-carrier waveform symbol; and
the bigger the sequence length of the tail sequence of modulation symbols, the shorter the mapping length of the at least one PTRS symbol.

**5.** The UE of any one of claims 2 to 4, wherein the PTRS configuration is indicative of:

a number of PTRS groups into which the at least one PTRS symbol is to be divided within the single-carrier waveform symbol; and
a number of PTRS symbols in each of the PTRS groups, PTRS symbols being arranged consecutive in time in each of the PTRS groups.

**6.** The UE of claim 5, wherein the at least one memory and the computer program code are configured to, with the at least one processor, cause the UE to determine the number of the PTRS groups according to the following criterion:
the bigger the sequence length of at least one of the head sequence of modulation symbols and the tail sequence of the modulation symbols, the smaller the number of the PTRS groups into which the at least one PTRS symbol is to be divided within the single-carrier waveform symbol.

**7.** The UE of claim 5 or 6, wherein the at least one memory and the computer program code are configured to, with the at least one processor, cause the UE to determine the PTRS configuration according to at least one of the following criteria:

the bigger the sequence length of the head sequence of modulation symbols, the farther a first PTRS group of the PTRS groups is relative to the head end of the single-carrier waveform symbol; and
the bigger the sequence length of the tail sequence of modulation symbols, the farther a last PTRS group of the PTRS groups is relative to the tail end of the single-carrier waveform signal.

**8.** The UE of any one of claims 1 to 7, wherein the sequence lengths of the head sequence of modulation symbols and the tail sequence of modulation symbols are equal,

and optionally wherein the at least one memory and the computer program code are configured to, with the at least one processor, cause the UE to determine the PTRS configuration additionally based on at least one of:

a number of physical resource blocks dedicated to a communication channel established between the UE and the network node;
a Modulation and Coding Scheme (MCS) used by the UE for the communications;
a symbol length used in the communication channel; and
a subcarrier spacing applied for the communication channel,

and optionally wherein the at least one memory further comprises:

a PTRS database comprising a plurality of database entries, each of the plurality of database entries being indicative of: (i) a PTRS configuration, and (ii) at least one of a head sequence of modulation symbols and a tail sequence of modulation symbols by which the PTRS configuration is determined; and

wherein the at least one memory and the computer program code are configured to, with the at least one processor, cause the UE to determine the PTRS configuration by selecting the PTRS configuration corresponding to the information from the PTRS database.

9. A network node (500) operable in a communication network, comprising:

at least one processor (502); and
at least one memory (504) comprising a computer program code;
wherein the at least one memory and the computer program code are configured to, with the at least one processor, cause the network node to:

transmit, to a User Equipment, UE, information that is indicative of: (i) a head sequence of modulation symbols to be appended to a head end of a single-carrier waveform symbol, and (ii) a tail sequence of modulation symbols to be appended to a tail end of the single-carrier waveform symbol, wherein the information causes the UE to determine a Phase Tracking Reference Signal, PTRS, configuration based on a sequence length of at least one of the head sequence of modulation symbols and the tail sequence of modulation symbols, the PTRS configuration being indicative of how at least one PTRS symbol is to be mapped within the single-carrier waveform symbol (S602); and
perform communications with the UE using the PTRS configuration (S604),
wherein the PTRS configuration is indicative of a mapping start point of the at least one PTRS symbol within the single-carrier waveform symbol,
wherein the mapping start point implies a distance from the head end of the single-carrier waveform symbol to a first PTRS symbol of the at least one PTRS symbol within the single-carrier waveform symbol,
wherein the single-carrier waveform symbol comprises at least one of a known Tail Discrete Fourier Transform spread Orthogonal Frequency Division Multiplexing, KT-DFT-s-OFDM, symbol or a unique word Discrete Fourier Transform spread Orthogonal Frequency Division Multiplexing, UW-DFT-s-sOFDM, symbol.

10. The network node of claim 9, wherein the PTRS configuration is indicative of:
a mapping length of the at least one PTRS symbol within the single-carrier waveform symbol, the mapping length being calculated from the mapping start point.

11. The network node of claim 10, wherein

the mapping start point of the at least one PTRS symbol is determined based on the sequence length of the head sequence of modulation symbols and the mapping length of the at least one PTRS symbol is determined based on the sequence length of the tail sequence of modulation symbols; or
the mapping start point of the at least one PTRS symbol is determined based on the sequence length of the tail sequence of modulation symbols and the mapping length of the at least one PTRS symbol is determined based on the sequence length of the head sequence of modulation symbols

12. The network node of claim 11, wherein the mapping start point and the mapping length are determined based on at least one of the following criteria:

the bigger the sequence length of the head sequence of modulation symbols, the farther the mapping start point of the at least one PTRS symbol is relative to the head end of the single-carrier waveform symbol; and
the bigger the sequence length of the tail sequence of modulation symbols, the shorter the mapping length of the at least one PTRS symbol.

13. The network node of any one of claims 10 to 12, wherein the PTRS configuration is indicative of:

a number of PTRS groups into which the at least one PTRS symbol is to be divided within the single-carrier waveform symbol; and
a number of PTRS symbols in each of the PTRS groups, PTRS symbols being arranged consecutive in time in each of the PTRS groups.

**14.** The network node of claim 13, wherein the number of the PTRS groups is determined according to the following criterion:

the bigger the sequence length of at least one of the head sequence of modulation symbols and the tail sequence of the modulation symbols, the smaller the number of the PTRS groups into which the at least one PTRS symbol is to be divided within the single-carrier waveform symbol.

**15.** The network node of claim 13 or 14, wherein the PTRS configuration is determined according to at least one of the following criteria:

the bigger the sequence length of the head sequence of modulation symbols, the farther a first PTRS group of the PTRS groups is relative to the head end of the single-carrier waveform symbol; and
the bigger the sequence length of the tail sequence of modulation symbols, the farther a last PTRS group of the PTRS groups is relative to the tail end of the single-carrier waveform signal.

**Patentansprüche**

**1.** Teilnehmereinrichtung, UE 300, die in einem Kommunikationsnetzwerk betreibbar ist und Folgendes umfasst:

mindestens einen Prozessor (302); und
mindestens einen Speicher (304), der einen Computerprogrammcode umfasst;
wobei der mindestens eine Speicher und der Computerprogrammcode dazu ausgelegt sind, die UE mit dem mindestens einen Prozessor zu Folgendem zu veranlassen:

Empfangen von Informationen, die Folgendes umfassen, von einem Netzwerkknoten: (i) eine vordere Sequenz von Modulationssymbolen, die an ein vorderes Ende eines Einzelträgerwellenformsymbols anzuhängen ist, und (ii) eine hintere Sequenz von Modulationssymbolen, die an ein hinteres Ende des Einzelträgerwellenformsymbols anzuhängen ist (S402);
Bestimmen einer Phasenverfolgungsreferenzsignal(PTRS)-Auslegung, die anzeigt, wie mindestens ein PTRS-Symbol im Einzelträgerwellenformsymbol zuzuordnen ist, auf Basis einer Sequenzlänge von mindestens einer der vorderen Sequenz von Modulationssymbolen und der hinteren Sequenz von Modulationssymbolen (S404); und
Durchführen einer Kommunikation mit dem Netzwerkknoten unter Verwendung der PTRS-Auslegung (S406),
wobei die PTRS-Auslegung einen Startpunkt der Zuordnung des mindestens einen PTRS-Symbols im Einzelträgerwellenformsymbol anzeigt,
wobei der Startpunkt der Zuordnung einen Abstand vom vorderen Ende des Einzelträgerwellenformsymbols zu einem ersten PTRS-Symbol des mindestens einen PTRS-Symbols im Einzelträgerwellenformsymbol impliziert,
wobei das Einzelträgerwellenformsymbol mindestens eines von einem bekannten Tail-Discrete-Fourier-Transform-Spread-Orthogonal-Frequency-Division-Multiplexing(KT-DFT-s-OFDM)-Symbol oder einem Unique-Word-Discrete-Fourier-Transform-Spread-Orthogonal-Frequency-Division-Multiplexing(UW-DFT-s-sOFDM)-Symbol umfasst.

**2.** UE nach Anspruch 1, wobei die PTRS-Auslegung Folgendes anzeigt:
eine Zuordnungslänge des mindestens einen PTRS-Symbols im Einzelträgerwellenformsymbol, wobei die Zuordnungslänge aus dem Startpunkt für die Zuordnung berechnet wird.

**3.** UE nach Anspruch 2, wobei der mindestens eine Speicher und der Computerprogrammcode dazu ausgelegt sind, die UE mit dem mindestens einen Prozessor zu Folgendem zu veranlassen:

Bestimmen des Startpunkts für die Zuordnung des mindestens einen PTRS-Symbols auf Basis der Sequenzlänge der vorderen Sequenz von Modulationssymbolen und Bestimmen der Zuordnungslänge des mindestens einen PTRS-Symbols auf Basis der Sequenzlänge der hinteren Sequenz von Modulationssymbolen; oder
Bestimmen des Startpunkts für die Zuordnung des mindestens einen PTRS-Symbols auf Basis der Sequenzlänge der hinteren Sequenz von Modulationssymbolen und Bestimmen der Zuordnungslänge des mindestens einen PTRS-Symbols auf Basis der Sequenzlänge der vorderen Sequenz von Modulationssymbolen.

4. UE nach Anspruch 3, wobei der mindestens eine Speicher und der Computerprogrammcode dazu ausgelegt sind, die UE mit dem mindestens einen Prozessor zu veranlassen, den Startpunkt für die Zuordnung und die Zuordnungslänge gemäß mindestens einem der folgenden Kriterien zu bestimmen:

je größer die Sequenzlänge der vorderen Sequenz von Modulationssymbolen, desto weiter ist der Startpunkt für die Zuordnung des mindestens einen PTRS-Symbols relativ zum vorderen Ende von jedem des Einzelträgerwellenformsymbols entfernt; und
je größer die Sequenzlänge der hinteren Sequenz von Modulationssymbolen, desto kürzer ist die Zuordnungslänge des mindestens einen PTRS-Symbols.

5. UE nach einem der Ansprüche 2 bis 4, wobei die PTRS-Auslegung Folgendes anzeigt:

eine Anzahl von PTRS-Gruppen, in die das mindestens eine PTRS-Symbol im Einzelträgerwellenformsymbol zu teilen ist; und
eine Anzahl von PTRS-Symbolen in jeder der PTRS-Gruppen, wobei PTRS-Symbole in jeder der PTRS-Gruppen zeitlich aufeinanderfolgend angeordnet werden.

6. UE nach Anspruch 5, wobei der mindestens eine Speicher und der Computerprogrammcode dazu ausgelegt sind, die UE mit dem mindestens einen Prozessor zu veranlassen, die Anzahl der PTRS-Gruppen gemäß dem folgenden Kriterium zu bestimmen:
je größer die Sequenzlänge von mindestens einer der vorderen Sequenz von Modulationssymbolen und der hinteren Sequenz der Modulationssymbole, desto kleiner ist die Anzahl der PTRS-Gruppen, in die das mindestens eine PTRS-Symbol im Einzelträgerwellenformsymbol geteilt wird.

7. UE nach Anspruch 5 oder 6, wobei der mindestens eine Speicher und der Computerprogrammcode dazu ausgelegt sind, die UE mit dem mindestens einen Prozessor zu veranlassen, die PTRS-Auslegung gemäß mindestens einem der folgenden Kriterien zu bestimmen:

je größer die Sequenzlänge der vorderen Sequenz von Modulationssymbolen, desto weiter ist eine erste PTRS-Gruppe der PTRS-Gruppen relativ zum vorderen Ende des Einzelträgerwellenformsymbols entfernt; und
je größer die Sequenzlänge der hinteren Sequenz von Modulationssymbolen, desto weiter ist eine letzte PTRS-Gruppe der PTRS-Gruppen relativ zum hinteren Ende des Einzelträgerwellenformsymbols entfernt.

8. UE nach einem der Ansprüche 1 bis 7, wobei die Sequenzlängen der vorderen Sequenz von Modulationssymbolen und der hinteren Sequenz von Modulationssymbolen gleich sind,
und wahlweise wobei der mindestens eine Speicher und der Computerprogrammcode dazu ausgelegt sind, die UE mit dem mindestens einen Prozessor zu veranlassen, die PTRS-Auslegung zusätzlich auf Basis von mindestens einem von Folgendem zu bestimmen:

einer Anzahl von physischen Ressourcenblöcken, die für einen Kommunikationskanal dediziert sind, der zwischen der UE und dem Netzwerkknoten eingerichtet ist;
einem Modulations- und Codierschema (MCS), das von der UE für die Kommunikation verwendet wird;
einer Symbollänge, die im Kommunikationskanal verwendet wird; und
einem Unterträgerabstand, der für den Kommunikationskanal angewandt wird,
und wahlweise wobei der mindestens eine Speicher ferner Folgendes umfasst:

eine PTRS-Datenbank, die eine Vielzahl von Datenbankeinträgen umfasst, wobei jeder der Vielzahl von Datenbankeinträgen Folgendes anzeigt: (i) eine PTRS-Auslegung und (ii) mindestens eine von einer vorderen Sequenz von Modulationssymbolen und einer hinteren Sequenz von Modulationssymbolen, von denen die PTRS-Auslegung bestimmt wird; und
wobei der mindestens eine Speicher und der Computerprogrammcode dazu ausgelegt sind, die UE mit dem mindestens einen Prozessor zu veranlassen, die PTRS-Auslegung durch Auswählen der PTRS-Auslegung, die den Informationen aus der PTRS-Datenbank entspricht, zu bestimmen.

9. Netzwerkknoten (500), der in einem Kommunikationsnetzwerk betreibbar ist und Folgendes umfasst:

mindestens einen Prozessor (502); und
mindestens einen Speicher (504), der einen Computerprogrammcode umfasst;

wobei der mindestens eine Speicher und der Computerprogrammcode dazu ausgelegt sind, den Netzwerkknoten mit dem mindestens einen Prozessor zu Folgendem zu veranlassen:

Übertragen von Informationen, die Folgendes anzeigen, zu einer Teilnehmereinrichtung, UE: (i) eine vordere Sequenz von Modulationssymbolen, die an ein vorderes Ende eines Einzelträgerwellenformsymbols anzuhängen ist, und (ii) eine hintere Sequenz von Modulationssymbolen, die an ein hinteres Ende des Einzelträgerwellenformsymbols anzuhängen ist, wobei die Informationen die UE veranlassen, eine Phasenverfolgungsreferenzsignal(PTRS)-Auslegung auf Basis einer Sequenzlänge von mindestens einer der vorderen Sequenz von Modulationssymbolen und der hinteren Sequenz von Modulationssymbolen zu bestimmen, wobei die PTRS-Auslegung anzeigt, wie mindestens ein PTRS-Symbol im Einzelträgerwellenformsymbol zuzuordnen ist (S602); und

Durchführen einer Kommunikation mit der UE unter Verwendung der PTRS-Auslegung (S604),

wobei die PTRS-Auslegung einen Startpunkt der Zuordnung des mindestens einen PTRS-Symbols im Einzelträgerwellenformsymbol anzeigt,

wobei der Startpunkt der Zuordnung einen Abstand vom vorderen Ende des Einzelträgerwellenformsymbols zu einem ersten PTRS-Symbol des mindestens einen PTRS-Symbols im Einzelträgerwellenformsymbol impliziert,

wobei das Einzelträgerwellenformsymbol mindestens eines von einem bekannten Tail-Discrete-Fourier-Transform-Spread-Orthogonal-Frequency-Division-Multiplexing(KT-DFT-s-OFDM)-Symbol oder einem Unique-Word-Discrete-Fourier-Transform-Spread-Orthogonal-Frequency-Division-Multiplexing(UW-DFT-s-sOFDM)-Symbol umfasst.

10. Netzwerkknoten nach Anspruch 9, wobei die PTRS-Auslegung Folgendes anzeigt:
eine Zuordnungslänge des mindestens einen PTRS-Symbols im Einzelträgerwellenformsymbol, wobei die Zuordnungslänge aus dem Startpunkt für die Zuordnung berechnet wird.

11. Netzwerkknoten nach Anspruch 10, wobei

der Startpunkt für die Zuordnung des mindestens einen PTRS-Symbols auf Basis der Sequenzlänge der vorderen Sequenz von Modulationssymbolen bestimmt wird und die Zuordnungslänge des mindestens einen PTRS-Symbols auf Basis der Sequenzlänge der hinteren Sequenz von Modulationssymbolen bestimmt wird; oder
der Startpunkt für die Zuordnung des mindestens einen PTRS-Symbols auf Basis der Sequenzlänge der hinteren Sequenz von Modulationssymbolen bestimmt wird und die Zuordnungslänge des mindestens einen PTRS-Symbols auf Basis der Sequenzlänge der vorderen Sequenz von Modulationssymbolen bestimmt wird

12. Netzwerkknoten nach Anspruch 11, wobei der Startpunkt für die Zuordnung und die Zuordnungslänge auf Basis von mindestens einem der folgenden Kriterien bestimmt werden:

je größer die Sequenzlänge der vorderen Sequenz von Modulationssymbolen, desto weiter ist der Startpunkt für die Zuordnung des mindestens einen PTRS-Symbols relativ zum vorderen Ende des Einzelträgerwellenformsymbols entfernt; und
je größer die Sequenzlänge der hinteren Sequenz von Modulationssymbolen, desto kürzer ist die Zuordnungslänge des mindestens einen PTRS-Symbols.

13. Netzwerkknoten nach einem der Ansprüche 10 bis 12, wobei die PTRS-Auslegung Folgendes anzeigt:

eine Anzahl von PTRS-Gruppen, in die das mindestens eine PTRS-Symbol im Einzelträgerwellenformsymbol zu teilen ist; und
eine Anzahl von PTRS-Symbolen in jeder der PTRS-Gruppen, wobei PTRS-Symbole in jeder der PTRS-Gruppen zeitlich aufeinanderfolgend angeordnet werden.

14. Netzwerkknoten nach Anspruch 13, wobei die Anzahl der PTRS-Gruppen gemäß dem folgenden Kriterium bestimmt wird:
je größer die Sequenzlänge von mindestens einer der vorderen Sequenz von Modulationssymbolen und der hinteren Sequenz der Modulationssymbole, desto kleiner ist die Anzahl der PTRS-Gruppen, in die das mindestens eine PTRS-Symbol im Einzelträgerwellenformsymbol geteilt wird.

**15.** Netzwerkknoten nach Anspruch 13 oder 14, wobei die PTRS-Auslegung mindestens gemäß einem der folgenden Kriterien bestimmt wird:

je größer die Sequenzlänge der vorderen Sequenz von Modulationssymbolen, desto weiter ist eine erste PTRS-Gruppe der PTRS-Gruppen relativ zum vorderen Ende des Einzelträgerwellenformsymbols entfernt; und

je größer die Sequenzlänge der hinteren Sequenz von Modulationssymbolen, desto weiter ist eine letzte PTRS-Gruppe der PTRS-Gruppen relativ zum hinteren Ende des Einzelträgerwellenformsignals entfernt.

**Revendications**

**1.** Équipement utilisateur, UE, (300), pouvant fonctionner dans un réseau de communication, comprenant :

au moins un processeur (302) ; et

au moins une mémoire (304) comprenant un code de programme informatique ;

dans lequel l'au moins une mémoire et le code de programme informatique sont configurés pour, avec l'au moins un processeur, amener l'UE à :

recevoir d'un nœud de réseau des informations indiquant : (i) une séquence de tête des symboles de modulation à annexer à une extrémité de tête d'un symbole de forme d'onde de porteuse unique, et (ii) une séquence de queue des symboles de modulation à annexer à une extrémité de queue du symbole de forme d'onde de porteuse unique (S402) ;

sur la base d'une longueur de séquence d'au moins une parmi la séquence de tête des symboles de modulation et la séquence de queue des symboles de modulation, déterminer une configuration de signal de référence de suivi de phase, PTRS, qui indique comment au moins un symbole PTRS doit être mappé dans le symbole de forme d'onde de porteuse unique (S404) ; et

effectuer des communications avec le nœud de réseau en utilisant la configuration PTRS (S406),

dans lequel la configuration PTRS indique un point de départ de mappage de l'au moins un symbole PTRS dans le symbole de forme d'onde de porteuse unique,

dans lequel le point de départ de mappage implique une distance entre l'extrémité de tête du symbole de forme d'onde de porteuse unique et un premier symbole PTRS du ou des symboles PTRS dans le symbole de forme d'onde de porteuse unique,

dans lequel le symbole de forme d'onde de porteuse unique comprend au moins un parmi un symbole de multiplexage par répartition en fréquences orthogonales à propagation par transformée de Fourier discrète à queue connue, KT-DFT-s-OFDM, et un symbole de multiplexage par répartition en fréquences orthogonales à propagation par transformée de Fourier discrète, à mot unique, UW-DFT-s-sOFDM.

**2.** UE selon la revendication 1, dans lequel la configuration PTRS indique :
une longueur de mappage de l'au moins un symbole PTRS dans le symbole de forme d'onde de porteuse unique, la longueur de mappage étant calculée à partir du point de départ de mappage.

**3.** UE selon la revendication 2, dans lequel l'au moins une mémoire et le code de programme informatique sont configurés pour, avec l'au moins un processeur, amener l'UE à :

déterminer le point de départ de mappage de l'au moins un symbole PTRS sur la base de la longueur de séquence de la séquence de tête des symboles de modulation, et déterminer la longueur de mappage de l'au moins un symbole PTRS sur la base de la longueur de séquence de la séquence de queue des symboles de modulation ; ou

déterminer le point de départ de mappage de l'au moins un symbole PTRS sur la base de la longueur de séquence de la séquence de queue des symboles de modulation, et déterminer la longueur de mappage de l'au moins un symbole PTRS sur la base de la longueur de séquence de la séquence de tête des symboles de modulation.

**4.** UE selon la revendication 3, dans lequel l'au moins une mémoire et le code de programme informatique sont configurés pour, avec l'au moins un processeur, amener l'UE à déterminer le point de départ de mappage et la longueur de mappage selon au moins l'un des critères suivants :

plus la longueur de séquence de la séquence de tête des symboles de modulation est grande, plus le point de départ de mappage de l'au moins un symbole PTRS est éloigné de l'extrémité de tête de chaque symbole de forme d'onde de porteuse unique ; et

17

plus la longueur de séquence de la séquence de queue des symboles de modulation est grande, plus la longueur de mappage de l'au moins un symbole PTRS est courte.

5. UE de l'une des revendications 2 à 4, dans lequel la configuration PTRS indique :

un nombre de groupes PTRS sur lequel le ou les symboles PTRS doivent être répartis dans le symbole de forme d'onde de porteuse unique ; et
un nombre de symboles PTRS dans chacun des groupes PTRS, les symboles PTRS étant agencés de manière consécutive dans le temps dans chacun des groupes PTRS.

6. UE selon la revendication 5, dans lequel l'au moins une mémoire et le code de programme informatique sont configurés pour, avec l'au moins un processeur, amener l'UE à déterminer le nombre de groupes PTRS selon le critère suivant :
plus la longueur de séquence d'au moins une parmi la séquence de tête des symboles de modulation et la séquence de queue des symboles de modulation est grande, plus le nombre de groupes PTRS sur lequel le ou les symboles PTRS doivent être répartis dans le symbole de forme d'onde de porteuse unique est petit.

7. UE selon la revendication 5 ou 6, dans lequel l'au moins une mémoire et le code de programme informatique sont configurés pour, avec l'au moins un processeur, amener l'UE à déterminer la configuration PTRS selon au moins l'un des critères suivants :

plus la longueur de séquence de la séquence de tête des symboles de modulation est grande, plus un premier groupe PTRS des groupes PTRS est éloigné de l'extrémité de tête du symbole de forme d'onde de porteuse unique ; et
plus la longueur de séquence de la séquence de queue des symboles de modulation est grande, plus un dernier groupe PTRS des groupes PTRS est éloigné de l'extrémité de queue du symbole de forme d'onde de porteuse unique.

8. UE de l'une des revendications 1 à 7, dans lequel les longueurs de séquences de la séquence de tête des symboles de modulation et la séquence de queue des symboles de modulation sont égales,
et facultativement, dans lequel l'au moins une mémoire et le code de programme informatique sont configurés pour, avec l'au moins un processeur, amener l'UE à déterminer la configuration PTRS en se basant en outre sur au moins l'un des éléments suivants :

un nombre de blocs de ressources physiques dédiés à un canal de communication établi entre l'UE et le nœud de réseau ;
un schéma de modulation et de codage (MCS) utilisé par l'UE pour les communications ;
une longueur de symbole utilisée dans le canal de communication ; et
un espacement de sous-porteuse appliqué pour le canal de communication,
et facultativement, dans lequel l'au moins une mémoire comprend en outre :

une base de données PTRS comprenant une pluralité d'entrées de base de données, chacune de la pluralité d'entrées de base de données indiquant : (i) une configuration PTRS, et (ii) au moins une parmi une séquence de tête des symboles de modulation et une séquence de queue des symboles de modulation par laquelle la configuration PTRS est déterminée ; et
dans lequel l'au moins une mémoire et le code de programme informatique sont configurés pour, avec l'au moins un processeur, amener l'UE à déterminer la configuration PTRS en sélectionnant la configuration PTRS correspondant aux informations dans la base de données PTRS.

9. Nœud de réseau (500) pouvant fonctionner dans un réseau de communication, comprenant :

au moins un processeur (502) ; et
au moins une mémoire (504) comprenant un code de programme informatique ;
l'au moins une mémoire et le code de programme informatique sont configurés pour, avec l'au moins un processeur, amener le nœud de réseau à :

transmettre à un équipement utilisateur, UE, des informations indiquant : (i) une séquence de tête des symboles de modulation à annexer à une extrémité de tête d'un symbole de forme d'onde de porteuse unique, et (ii) une séquence de queue des symboles de modulation à annexer à une extrémité de queue du symbole de forme d'onde de porteuse unique, dans lequel les informations amènent l'UE à déterminer une configuration de signal de référence de suivi de phase, PTRS, sur la base d'une longueur de séquence d'au moins une parmi la séquence de tête des symboles de modulation et la séquence de queue des symboles de modulation, la configuration PTRS indiquant comment au moins un symbole PTRS doit être mappé dans le symbole de forme d'onde de porteuse unique (S602) ; et

effectuer des communications avec l'UE en utilisant la configuration PTRS (S604),

dans lequel la configuration PTRS indique un point de départ de mappage de l'au moins un symbole PTRS dans le symbole de forme d'onde de porteuse unique,

dans lequel le point de départ de mappage implique une distance entre l'extrémité de tête du symbole de forme d'onde de porteuse unique et un premier symbole PTRS du ou des symboles PTRS dans le symbole de forme d'onde de porteuse unique,

dans lequel le symbole de forme d'onde de porteuse unique comprend au moins un parmi un symbole de multiplexage par répartition en fréquences orthogonales à propagation par transformée de Fourier discrète à queue connue, KT-DFT-s-OFDM, ou un symbole de multiplexage par répartition en fréquences orthogonales à propagation par transformée de Fourier discrète, à mot unique, UW-DFT-s-sOFDM.

10. Nœud de réseau selon la revendication 9, dans lequel la configuration PTRS indique :
une longueur de mappage de l'au moins un symbole PTRS dans le symbole de forme d'onde de porteuse unique, la longueur de mappage étant calculée à partir du point de départ de mappage.

11. Nœud de réseau selon la revendication 10, dans lequel

le point de départ de mappage de l'au moins un symbole PTRS est déterminé sur la base de la longueur de séquence de la séquence de tête des symboles de modulation, et la longueur de mappage de l'au moins un symbole PTRS est déterminée sur la base de la longueur de séquence de la séquence de queue des symboles de modulation ; ou

le point de départ de mappage de l'au moins un symbole PTRS est déterminé sur la base de la longueur de séquence de la séquence de queue des symboles de modulation, et la longueur de mappage de l'au moins un symbole PTRS est déterminée sur la base de la longueur de séquence de la séquence de tête des symboles de modulation.

12. Nœud de réseau selon la revendication 11, dans lequel le point de départ de mappage et la longueur de mappage sont déterminés sur la base d'au moins l'un des critères suivants :

plus la longueur de séquence de la séquence de tête des symboles de modulation est grande, plus le point de départ de mappage de l'au moins un symbole PTRS est éloigné de l'extrémité de tête du symbole de forme d'onde de porteuse unique ; et

plus la longueur de séquence de la séquence de queue des symboles de modulation est grande, plus la longueur de mappage de l'au moins un symbole PTRS est courte.

13. Nœud de réseau de l'une des revendications 10 à 12, dans lequel la configuration PTRS indique :

un nombre de groupes PTRS sur lequel le ou les symboles PTRS doivent être répartis dans le symbole de forme d'onde de porteuse unique ; et

un nombre de symboles PTRS dans chacun des groupes PTRS, les symboles PTRS étant agencés de manière consécutive dans le temps dans chacun des groupes PTRS.

14. Nœud de réseau selon la revendication 13, dans lequel le nombre de groupes PTRS est déterminé selon le critère suivant :
plus la longueur de séquence d'au moins une parmi la séquence de tête des symboles de modulation et la séquence de queue des symboles de modulation est grande, plus le nombre de groupes PTRS sur lequel le ou les symboles PTRS doivent être répartis dans le symbole de forme d'onde de porteuse unique est petit.

15. Nœud de réseau selon la revendication 13 ou 14, dans lequel la configuration PTRS est déterminée selon au moins l'un des critères suivants :

plus la longueur de séquence de la séquence de tête des symboles de modulation est grande, plus un premier groupe PTRS des groupes PTRS est éloigné de l'extrémité de tête du symbole de forme d'onde de porteuse unique ; et
plus la longueur de séquence de la séquence de queue des symboles de modulation est grande, plus un dernier groupe PTRS des groupes PTRS est éloigné de l'extrémité de queue du signal de forme d'onde de porteuse unique.

```
                                                100

        102-1                    102-2                    102-3

┌──┬──────────────┬──┬──────────────┬──┬──────────────┐
│CP│    Symbol    │CP│    Symbol    │CP│    Symbol    │
└──┴──────────────┴──┴──────────────┴──┴──────────────┘
  104                104                104
```

**FIG. 1**

**FIG. 2**

EP 4 449 653 B1

**FIG. 3**

EP 4 449 653 B1

EP 4 449 653 B1

400

S402

```
Receiving, from a network node,
information that is indicative of:
(i) a head sequence of modulation symbols
to be appended to a head end of a single-carrier
waveform symbol, and
(iii) a tail sequence of modulation symbols to be
appended to a tail end of the single-carrier
waveform symbol
```

S404

```
Based on a sequence length of at least one of
the head and the tail sequences of modulation
symbols, determining a PTRS configuration
that is indicative of how at least one PTRS symbol
is to be mapped within the single-carrier
waveform symbol
```

S406

```
Performing communications with
the network node using the PTRS configuration
```

**FIG. 4**

500

504

508

Instructions

Memory

502

Processor

506

Transceiver

Network node

**FIG. 5**

EP 4 449 653 B1

600

S602

Transmitting, to a UE, information that is indicative of: (i) a head sequence of modulation symbols to be appended to a head end of a single-carrier waveform symbol, and
(ii) a tail sequence of modulation symbols to be appended to a tail end of the single-carrier waveform symbol, the control information causing the UE to determine a PTRS configuration based on a sequence length of at least one of the head and tail sequences of modulation symbols, the PTRS configuration being indicative of how at least one PTRS symbol is to be mapped within the single-carrier waveform symbol

S604

Performing communications with the UE using the PTRS configuration

**FIG. 6**

FIG. 7A

**FIG. 7B**

**FIG. 8A**

**FIG. 8B**

EP 4 449 653 B1

EP 4 449 653 B1

**FIG. 8C**

**FIG. 8D**

FIG. 8E

MCS22

BW=3000 MHz, SCS=960 kHz, KT64,Conf1
BW=3000 MHz, SCS=960 kHz, KT64,Conf2
BW=3000 MHz, SCS=960 kHz, KT64,Conf3
BW=3000 MHz, SCS=960 kHz, KT64,Conf4

**FIG. 8F**

EP 4 449 653 B1

**FIG. 8G**

**REFERENCES CITED IN THE DESCRIPTION**

**Patent documents cited in the description**

- WO 2019099535 A1